(19) Europäisches Patentamt
European Patent Office
Office européen des brevets

(11) EP 4 182 063 B1

(12) EUROPEAN PATENT SPECIFICATION

(45) Date of publication and mention
of the grant of the patent:
18.02.2026 Bulletin 2026/08

(21) Application number: 21862234.8

(22) Date of filing: 24.08.2021

(51) International Patent Classification (IPC):
**B01D 71/80** (2006.01)

(52) Cooperative Patent Classification (CPC):
**B01D 71/0281; B01D 53/228; B01D 67/0079;
B01D 69/148; B01D 71/76; B01D 71/80;**
B01D 71/52; B01D 71/56; B01D 2257/708;
B01D 2258/06; B01D 2323/21

(86) International application number:
PCT/TR2021/050852

(87) International publication number:
WO 2022/046013 (03.03.2022 Gazette 2022/09)

## (54) SEPARATION OF ALCOHOL VAPOR FROM THE MIXTURE OF ALCOHOL VAPOR AND NITROGEN WITH MIXED MATRIX MEMBRANES

ABTRENNUNG VON ALKOHOLDAMPF AUS EINEM ALKOHOLDAMPF-STICKSTOFF-GEMISCH MIT MISCHMATRIXMEMBRANEN

SÉPARATION DE VAPEUR D'ALCOOL DU MÉLANGE DE VAPEUR D'ALCOOL ET D'AZOTE AVEC DES MEMBRANES À MATRICE MIXTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 26.08.2020 TR 202013445

(43) Date of publication of application:
24.05.2023 Bulletin 2023/21

(73) Proprietor: ORTA DOGU TEKNIK UNIVERSITESI
06800 Ankara (TR)

(72) Inventors:
• KALIPÇILAR, Halil
06800 Çankaya/Ankara (TR)
• SAHIN, Fatma
19030 Ç (TR)

(74) Representative: Yalçiner Patent and Consulting Ltd.
Tunus Caddesi 85/3-4
Kavaklidere
06680 Ankara (TR)

(56) References cited:
CN-A- 103 585 899      CN-A- 109 012 235
CN-A- 111 450 717      DE-A1- 102011 082 830
ES-A1- 2 342 756

• SAHIN FATMA ET AL: "ZIF filled PDMS mixed matrix membranes for separation of solvent vapors from nitrogen", JOURNAL OF MEMBRANE SCIENCE, ELSEVIER BV, NL, vol. 598, 28 December 2019 (2019-12-28), XP086030138, ISSN: 0376-7388, [retrieved on 20191228], DOI: 10.1016/J.MEMSCI.2019.117792
• ZHU, W. ET AL.: "Introducing hydrophilic ultra-thin ZIF-L into mixed matrix membranes for CO2/CH 4 separation", RSC ADVANCES, vol. 9, no. 40, 2019, pages 23390 - 23399, XP055911152, Retrieved from the Internet <URL:https://pubs.rsc.org/en/content/articlelanding/2019/RA/C9RA04147H#!div> DOI: 10.1039/c9ra04147h

EP 4 182 063 B1

**Description**

**Technical Field of the Invention**

The invention relates to a ZIF-L-filled PEBAX-1657 mixed matrix membrane that provides the separation of volatile organic compounds in the vapor phase from $N_2$ and/or air.

**State of the Art of the Invention (Prior Art)**

Mixed matrix membranes (MMMs) consist of a combination of two phases, known as polymeric (continuous phase) and filler phase. Therefore, it reflects the important properties of both polymers (inexpensive raw material, transition to large size, and easy manufacturing) and organic-inorganic filler materials (high selectivity).

Mixed matrix membranes are divided into categories such as gas separation membrane, liquid separation membrane (pervaporation), and volatile organic compound (VOC) separation membrane (in vapor phase) according to their areas of use. Pervaporation, separation in the vapor phase, and gas separation processes are considered to be completely different processes from each other, and membrane development studies are carried out separately in the known state of the art for each of these processes.

VOCs are in the vapor phase and can be liquefied, and there are significant differences between VOCs and gases in terms of molecular size and chemical relationships. Therefore, the separation and permeability performances of the membranes differ for gases and volatile organic compounds (VOCs). In other words, a membrane that is good for gas separation may not perform well in the separation of VOCs.

Pervaporation is a very different process from vapor separation and takes place in the liquid phase. A membrane can react very differently to the vapor and liquid of the same substance since the properties of liquid and vapor phases are very different. Therefore, it is not correct to make a definitive judgment that a membrane that performs well for pervaporation will also be good in vapor separation. Therefore, separate membranes are developed for both processes (separation in the vapor phase and pervaporation).

Permeance and selectivity values are very different due to the fact that different mechanisms and factors are effective in volatile organic compound (VOC) separation and pervaporation membranes. For example, selectivities in water-selective pervaporation membranes increased to the level of 10,000 while selectivity of organics-selective membranes was generally below 100. The selectivity to the organics can increase to the level of 100,000 depending on the desired organics to be separated in the separation in the vapor phase (for example, in toluene/nitrogen separation).

The vapor of the liquid is at very low concentrations in gas during the separation process in the vapor phase. The main purpose of the separation in the vapor phase is, by separating low concentration VOCs from gases, to

- Recover the VOC and/or
- Clean the gas (e.g. cleaning the working environment air)

The separation of organics from water in the liquid phase is generally studied in pervaporation processes. The concentration of organics in water varies between 5% and 90%. Hydrophobic or hydrophilic membranes are developed depending on the amount of water in the mixture. The purpose of the pervaporation process is

- to recover the organics, to increase their concentration, and/or
- to clean the water.

Solvents are widely used in many industrial areas such as defense, electronics, printingpackaging, textile, rubber, paint, asphalt production. The most commonly used solvents are alcohols (such as methanol, ethanol, isopropanol, methoxy ethanol, and butanol), amines, aprotic solvents, ketones, and esters. The solvents are released as by-products or waste in many processes where volatile organic solvents are used. These solvents with low vapor pressures are generally called volatile organic compounds (VOCs). Solvents, which are inevitable to be used in industrial applications, cause environmental pollution due to their easy evaporation and cause the loss of high value-added chemicals economically. Therefore, it is very important that organic solvents are retained and recovered after use.

It has been stated that the solvent recovery process will reach the point of return on investment within approximately 14 weeks and a return of 4 times the investment can be achieved within 7 months after this point. However, the high initial installation cost prevents especially small and medium-sized production facilities from establishing a recovery unit even though the amount of profit to be obtained by the recovery of solvents is high. It is of great importance to reduce the process cost in order for solvent recovery process to become widespread.

The solvent recovery processes available in the industry are usually installed next to the facilities where the actual production is made. These processes largely involve basic processes such as adsorption, condensation, and distillation.

The solvents evaporated in the production facilities mix with the ambient air and cause a significant economic loss. For example, the concentration of VOCs removed from the production environment by airflow (sweep gas) in the sweep gas varies between 5-10 g/m³-air, indicating a solvent loss of about 2500-3000 tons per year in a medium-sized packaging printing facility. The air containing VOC is sucked from the environment at a volumetric flow rate of 100,000-150,000 m³/h in order to keep the ambient air clean in a facility of this size. This air is passed through the adsorption columns containing activated carbon and the VOC content is reduced. The regeneration process starts with the saturation of the activated carbon adsorption columns. Regeneration is performed with nitrogen ($N_2$) with a volumetric flow rate of 10,000-20,000 m³/h depending on the amount of activated carbon and VOC retained in the columns. The concentration of VOCs stripped from activated carbon in nitrogen is approximately 180-200 g/m³. The dew point temperatures are also very low due to the low partial pressures of the VOCs in nitrogen. For example, the dew point of 99.6% (vol.) $N_2$, 0.397% (vol.) VOC (ethyl acetate, ethanol, and isopropanol), and 0.003% (vol.) water vapor at 1 atm is -23.2°C (Room temperature 25°C and pressure 1.013 bar) from a medium-sized adsorption column. Similarly, the dew point of the mixture containing 99% (vol.) $N_2$, 0.6% (vol.) ethanol, and 0.4% (vol.) isopropanol is -2.4°C and the dew point of the mixture containing 98% $N_2$, 1.6% ethanol and 0.4% isopropanol is +5.5°C. Therefore, the condensation process is carried out at cryogenic temperatures. Condensation process at cryogenic temperatures causes an increase in the amount of energy consumption and an increase in the cost of the solvent recovery process. It is possible to make the process more economical by increasing the concentration of VOC in $N_2$ and thus the dew point temperature with a membrane-based separation process to be located in front of the condenser in solvent recovery process.

Zeolitic Imidazole Framework (ZIF) are microporous materials with a zeolite-like geometry that fall into the MOF group. It has been shown in the literature that there is ZIF with more than 105 different chemical structures and properties. ZIFs with zeolite topology have gained great importance in recent years due to the combination of superior properties of zeolite and MOFs. ZIFs are crystals with high gas adsorption capacity, chemical, and thermal stability. ZIF-L crystals are called two-dimensional leaf-shaped crystals because their width and length are too large according to their thickness. The ZIF-L has a gap of 9.4 Å x 7.0 Å x 5.3 Å and pore size of 0.31 nm.

ZIF varieties with different pore sizes, morphology, chemical, and crystal structures have different adsorption capacities. For example, ZIF-8 and ZIF-L are ZIF varieties with different pore sizes, morphology, chemical structure, and zeolite code. The adsorption capacities of both filler materials also differ due to all these differences. For example, it was found that ZIF-L almost never adsorbed $N_2$ while the $N_2$ adsorption capacity of ZIF-8 was 400 cm³/g STP.

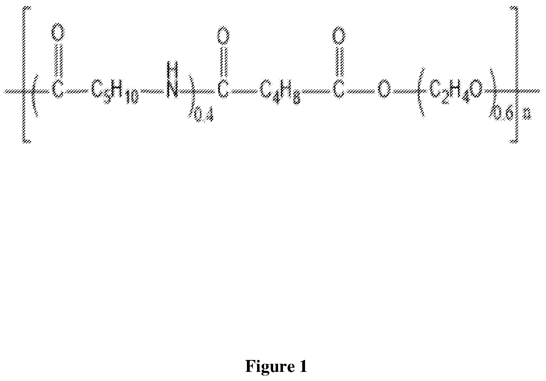

PEBAX-1657 polymer is a thermoplastic consisting of 40% polyamide and 60% polyether by weight (Figure 1). The hard polyamide part in the polymer composition provides mechanical stability and the soft polyether part provides permeability. PEBAX-1657 has high mechanical stability, thermal stability, and chemical resistance.

Below are the existing patents for membranes synthesized using PEBA polymer. The filler materials used in the present patents are ZIF-8, SAPO 34, carbon nanotube, zeolite 4A, ZSM-5. In addition, the separation of gases such as $CO_2$, $H_2$, $N_2$, $CH_4$, $O_2$ and He or some hydrocarbons such as ethane, ethylene, propane, n-butane, n-hexane, and methane has been carried out by membrane-based processes in the present patents.

- Patent no - US 2005/686090 B2: The separation of $CO_2$ and $H_2$ gases was studied using PEBAX-MH 1657 and PEG (polyethylene glycol) polymers.

- Patent no - WO 2010/137974 A1: The separation of $CO_2$, $H_2$, $N_2$, $CH_4$, $O_2$, and He gases was carried out with the composite membrane synthesized using PEBAX- MH 1657/PDMS (polymethyl siloxane) polymer.

- Patent no - US 2011/0120304 A1: The separation of $CO_2$, $N_2$, $CH_4$, and $H_2$ gases was carried out with the polymeric membrane synthesized using PEBAX-MH 1657/PEG polymers.

- Patent no - CN 2013/103100313 A: The membrane was prepared with PEBA- PEG and PEO (polyethyleneoxide) polymer mixture and the separation of $CO_2$ and $H_2$ gases was studied.

- Patent no - CN 2013/103537207 A: The separation of $CO_2$, $CH_4$, and $N_2$ was studied with the hybrid membranes synthesized using PEBAX 1657 polymer and carbon nanotube filler material.

- Patent no - CN 2015/104689730 A: The separation of $CO_2$, $N_2$, $CH_4$, and $H_2$ gases was carried out with the mixed matrix membrane synthesized using PEBAX 1657 polymer and different filler materials (SAPO 34, 4A or ZSM-5).

- Patent no - CN 2015/105582823 A: The separation of $CO_2$, $CH_4$, and $N_2$ was studied using PEBAX 1074, PEBAX 1657, PEBAX 2533, or PEBAX 4011 polymer and ZIF-8 filler material.

- Patent no - CN 2016/104607072 B: The separation of $CO_2$, $CH_4$, and $N_2$ was studied with the hybrid membranes synthesized using PEBAX 1657 and chitosan polymer and silica filler material.

- Patent no - CN 2017/104525006 B: The separation of $CO_2$, $CH_4$, and $N_2$ was studied with nanocomposite hydrogel membranes synthesized with PEBAX 1657 polymer, which was functionalized with a carboxylic acid.

- Patent no - US 2017/0157555 A1, US 2017/0157556 A1, and US 2017/0157557 A1: Studies with three different patents have supported each other. The separation of $N_2$, $H_2O$, $H_2S$, and some heavy hydrocarbons (ethane, ethylene, propane, N-butane, N-hexane, and methane) was studied with membranes synthesized using different PEBAX polymers (PEBAX 7233, PEBAX 7033, PEBAX 6333, PEBAX 2533, PEBAX 3533, PEBAX 1205, PEBAX 3000, PEBAX 1657, and PEBAX 1074).

A study conducted by Ruile Guo et al. relates to a mixed matrix membrane designed to separate $CO_2$ and $CH_4$ gases from each other, which is PEBAX MH 1657 (Pebax) polymer and a ZIF-L filler material modified with tannic acid (TA) to increase gas permeability performance and obtained with hydrophilic filler material expressed as hZIF-L. The $CO_2/CH_4$ selectivity value is 33.82.

The VOC sorption capacities of rubbery polymeric membranes are generally higher compared to gases. It has been stated in the studies in the literature as a result that volatile organic compounds accumulate in the membrane at a certain rate during the passage of polymeric membranes and increase its volume (swelling), which increases VOC permeability while decreasing $N_2$ permeability. Therefore, the separation performance of the membranes may vary depending on the concentration of VOC in the feed mixture.

The study conducted by Jin et al. relates to polyether block amide (PEBA)/ MAF-6 mixed matrix hollow fiber composite membrane. The said membranes are used in the pervaporation system for the separation of ethanol from the water mixture. Both ethanol and water were fed to the system in liquid form since it will be used in the membrane pervaporation system synthesized by Jin et al. Feeding of ethanol to the membrane in the form of liquid or vapor causes different changes in the structure of the membrane and affects the solubility and diffusion of the chemicals in the feed. The fact that MAF-6 and ZIF-L are hydrophobic does not mean that they have the same characteristics. The morphology of MAF-6 in the SEM micrograph is spherical agglomerates; however, the morphology of ZIF-L is leaf-shaped. Both filler materials will have different selectivity-permeability properties in this case. A hydrophobic filler material was used since this study aims to synthesize a membrane that passes through ethanol but is impermeable to water.

Another study conducted by Liu et al. is a dense membrane obtained by using PEBA-2533 polymer consisting of 20% polyamide and 80% polyether and separating VOCs from $N_2$. Membrane synthesis was performed with the nonsolvent phase inversion method. No filler material was used in membrane synthesis and selectivity (for ethanol) was found to be around 250. In addition, polysulfone was used in membrane synthesis as supporting layer. Mixed matrix membranes synthesized using filler material have higher permeability and selectivity values compared to pure polymeric dense membranes, as frequently found in the literature. The main reason for this is the combination of the selectivity-permeability properties of the polymer and the filler material in the mixed matrix membrane structure.

An alternative, highly selective, low-cost, and environmentally friendly mixed matrix membrane is needed for the separation of alcohol vapor such as ethanol and isopropanol obtained by evaporation of volatile organic compounds (VOCs) from $N_2$ gas and/or air in line with this information.

## Brief Description and Objects of the Invention

The present invention is related to a mixed matrix membrane that meets the aforementioned requirements, eliminates the disadvantages, and brings some additional advantages, allowing the separation of volatile organic compounds in the vapor phase from nitrogen ($N_2$) gas and/or air.

Alcohol vapors such as ethanol and isopropanol obtained by evaporation of volatile organic compounds (VOCs) were separated from $N_2$ gas with the invention.

The permeability value of ethanol and isopropanol vapors in the VOC category in the mixed matrix polymeric membrane consisting of PEBAX MH 1657 type polymer containing 10% ZIF-L is very high compared to the permeability of $N_2$ gas passing through the same membrane within the scope of the invention.

The compatibility of the properties of PEBAX-1657 polymer and ZIF-L filler material and the distribution of ZIF-L in a polymeric structure close to homogeneous without agglomeration have enabled the mixed matrix membranes synthesized to have high performance.

The VOC mixture obtained by evaporating ethanol and isopropanol with a mixed matrix membrane containing 10% ZIF-L was separated from $N_2$ gas (VOC: $N_2$ mole ratio 24:976, approximately 2% (mol) VOC) and the VOC/$N_2$ selectivity value was found to be approximately 1400 in the invention. The VOC permeability value is 10500 Barrer and the $N_2$ gas permeability value is 5 Barrer in these membranes.

ZIF-L filled PEBAX-1657 mixed matrix membrane was synthesized for use in separating the vapor mixture consisting of alcohols such as ethanol and isopropanol from $N_2$ gas and air with the invention. ZIF-Ls used in mixed matrix membrane synthesis are hydrophobic.

The invention is given to the ZIF-L/PEBAX-1657 mixed matrix membrane as a mixture of feed gas and vapor.

It is aimed to recover chemicals with the high added value used as solvents in the industry, not gases, with the invention.

Cryogenic condensation is one of the most important reasons for the high operating costs of solvent recovery process. The VOC concentration in $N_2$ and hence the partial pressure can be increased with the mixed matrix membrane of the invention placed between the adsorption column and the condenser. Thus, the operating cost of solvent recovery process can be reduced by reducing the load of the condenser without the need for condensation at cryogenic temperatures.

Membranes can also work at a concentration where the VOC: $N_2$ molar composition is quite low, such as 24:976 (approximately 2% by mole). This allows the widespread use of membranes in different industrial areas.

The VOC permeability values of mixed matrix membranes containing ZIF-L at different rates (between 0% and 40%) by mass vary between 7000-10500 Barrer and VOC/$N_2$ selectivity values vary between 970-1400. The mixed matrix membrane containing 10% ZIF-L by mass has the best membrane performance with a permeability of 10500 Barrer and a VOC/$N_2$ selectivity of around 1400.

## Definitions of Figures Describing the Invention

The figures developed by the present invention are described below in order to better understand the mixed matrix membrane and how the separation of the volatile organic compounds in the vapor phase from the $N_2$ gas takes place with this membrane.

**Figure 1:** Structure of PEBAX-1657 polymer

**Figure 2:** ZIF-L characterization a) XRD b) SEM c) TGA **d)** BET analysis

**Figure 3:** SEM image of the cross-sectional area of membranes **a)** Pure PEBAX-1657 membrane b) 5% ZIF-L/Pebax MMM c) 10% ZIF-L/Pebax MMM **d)** 20% ZIF-L/Pebax MMM e) 40% ZIF-L/Pebax MMM (x: Pure PEBAX Membrane, y: PES UF Support Layer **z:** 5% ZIF-LPEBAX MMM, t: 10% ZIF-LPEBAX MMM, **m:** 20% ZIF-LPEBAX MMM, **n:** 40% ZIF-L PEBAX MMM)

**Figure 4:** The VOC/$N_2$ gas separation and permeability measurement test setup used at the laboratory scale to determine the performance of the synthesized membranes. The membranes were tested at a temperature of 35°C and feed pressure of 2.92 bar.

**Figure 5:** The effect of ZIF-L amount in membrane on the membrane performance in the separation of approximately %2 (mol) VOC (% ethanol- % isopropanol)/$N_2$ mixture of pure PEBAX-1657 and ZIF-L/PEBAX MMMs a) VOC permeability values b) VOC/$N_2$ selectivity values

**Figure 6:** Representative flow sheets for typical solvent recovery processes with membrane separation systems added **A)** The membrane module is placed between the adsorption column and the condenser unit **B)** The first membrane module is placed before the adsorption column and the second membrane module before the condenser.

## Definitions of Elements/Components/Parts Composing the Invention

The components of the VOC/$N_2$ gas separation and permeability measurement test setup used in the laboratory scale to determine the performance of the synthesized membranes are listed below.

**1:** $N_2$ Gas
**2:** Mass Flow Controller
**3:** On-Off Valve
**4:** Pressure Check Valve
**5:** Pressure Transducer
**6:** 3-way Valve
**7:** Oven
**8:** Membrane Module
**9:** Gas Chromatograph

**10:** Soap Flow Meter

**11:** Condenser

**12:** Vacuum Pump

## Detailed Description of the Invention

The invention relates to a mixed matrix membrane comprising ZIF-L filler material and PEBAX-1657 polymer used in the separation of the vapor mixture consisting of alcohols such as ethanol and isopropanol from $N_2$ gas and/or the air. The thickness of the mixed matrix membrane is between 10 $\mu$m and 70 $\mu$m. The mixed matrix polymeric membrane of the invention comprises block copolymer matrix containing 60% elastomeric polyether block and 40% polyamide block by weight and 10%-40% by weight of ZIF-L filler material attached to this polymer matrix. The mixed matrix membrane is used in the separation of volatile organic compounds from nitrogen and/or air. Volatile organic compounds are a mixture of ethanol and isopropanol vapor.

The mixed matrix polymeric membrane of the invention comprises preferably a block copolymer matrix comprising 60% elastomeric polyether block and 40% polyamide block by weight and 10% by weight of ZIF-L filler material attached to this polymer matrix. The VOC/$N_2$ selectivity value of the mixed matrix polymeric membrane containing 10% ZIF-L filler material is 1395 $\pm$ 69, the EtOH/$N_2$ selectivity value thereof is 1508 $\pm$ 83, and the IPA/$N_2$ selectivity value thereof is 1199 $\pm$ 66.

ZIF-L crystals have their own two-dimensional leaf shape, unlike other ZIF varieties. There is a possibility that they can be directed in the polymeric matrix in a preferred crystallographic way with these morphologies. In addition, having an anisotropic pore system may cause an advantage in separation processes, unlike other ZIFs.

PEBA polymer has a hard polyamide part that provides mechanical stability and an amorphous, soft and permeable polyether part. The structure of the PEBAX-1657 polymer consists of 60% polyether and 40% polyamides by weight while the PEBAX-2533 polymer consists of 80% polyether and 20% polyamides by weight. The main reason for choosing PEBAX-1657 over PEBAX-2533 polymer is to increase the mechanical stability of the membranes thanks to the high amount of polyamide in it, in this study. It was ensured that the membranes synthesized by using filler material reached high permeability values. ZIF-L/PEBAX mixed matrix membranes recommended for use in solvent recovery process in the industry must have both high mechanical stability and high permeability.

## Synthesis and Characterization of ZIF-L

0.59 g zinc nitrate hexahydrate $Zn(NO_3)2.6H_2O$ and 1.3 g HMIM (2-methylimidazole) were dissolved separately in 40 g distilled water in ZIF-L synthesis. The HMIM aqueous solution was then added to the zinc nitrate hexahydrate aqueous solution. The molar ratio of the synthesis solution is $Zn^{+2}$:Hmim:$H_2O$ = 1:8:2240. The reaction was carried out at different times (1 hour - 4 hours), temperatures (23°C - 50°C), and mixing speed (100 rpm - 400 rpm). There are changes in crystal morphology depending on the production conditions. ZIF-L crystals were separated from the synthesis solution by centrifugation (at 2655 relative centrifugal force (RCF) for 5 minutes), washed first with water, and then 2 times with methanol. Thus synthesized ZIF-L was purified from unreacted HMIM and zinc nitrate hexahydrate.

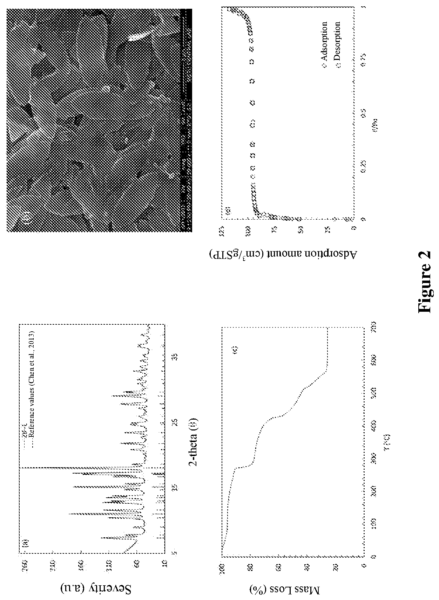

The phase identification of the obtained ZIF-L was performed by X-ray diffraction (Bruker X-ray diffractometer 40 kV, Cu K$\alpha$ radiation). ZIF-L was dried overnight at 70°C prior to XRD. The XRD patterns of ZIF-L and the reference XRD patterns taken from the literature are also shown in Figure 2.a. The ZIF-L shown in this XRD value was produced at 23°C and 100 rpm for 1 hour. The peak intensities and peak positions of ZIF-L coincide with the corresponding reference pattern. No peaks of any crystal phase other than ZIF-L were identified as seen in the XRD pattern. This shows that ZIF-L crystals are synthesized with high purity and success. The size and morphology of ZIF-L were determined by scanning electron microscope (SEM) (Quanta 400 F Field Emission Series) micrographs. At least 50 ZIF-L sizes was measured in the micrograph and the size of the synthesized ZIF-L was determined by averaging them for each sample. This process was repeated in at least 3 samples synthesized at different times under the same conditions, proving the reproducibility of the synthesis method. It was seen that ZIF-L has a two-dimensional leaf-like morphology as stated in the literature (Figure 2.b). ZIF-L with a length and width values of approximately 5 $\mu$m and 2.5 $\mu$m was synthesized. The aspect ratio of ZIF-L is approximately 2. The thickness of the ZIF-L crystals is approximately 150 $\pm$ 39 nm and is very small compared to the width and length. Standing upright or broken ZIF-L crystals appear as bright lines in SEM micrographs.

The thermal stability of ZIF-L was determined by analyzing with a thermogravimetric analysis (TGA) (Shimadzu DTG-60 H). The heating rate was 10°C/min and the analyzes were performed in the air environment in the TGA analysis. The ZIF-L TGA curve showed a cascading decrease under airflow (Figure 2.c). Approximately 12% weight loss up to a temperature of 280°C was attributed to the removal of the solvent in the structure of ZIF-L and the release of the excess imidazolate during crystal formation.

Approximately 27.5% residues were formed from ZIF-L crystals, which can be defined as ZnO. Nitrogen adsorption/desorption isotherms were obtained at 77 K with a Micromeritics Tristar II device. ZIF-Ls were degassed at 110°C (24 hours) before analysis. The $N_2$ adsorption isotherms of ZIF-L are Type-1 and there is no hysteresis in the isotherms (Figure 2.d). Such isotherms are characteristic of microporous materials. The $N_2$ adsorption capacity of ZIF-L was found to be approximately 100 cm³STP/g.

**Synthesis of Mixed Matrix Membranes (MMM)**

The production method of the mixed matrix polymeric membrane generally comprises the following process steps;

- Dissolving 6-12% of block copolymer by weight containing 60% elastomeric polyether block and 40% polyamide block by weight at 60°C-80°C for 1-2 hours at 100-300 rpm in ethanol/water mixture by stirring,
- Cooling to 20°C-35°C and stirring for 1-2 more hours,
- Adding 10%-40% of ZIF-L filler material by weight into the solution,
- Stirring at 20°C-35°C for 1-2 hours at 100-200 rpm,
- Drawing the resulting membrane solution on the commercial PES support layer at room temperature.

After the membranes are synthesized, they are annealed at atmospheric pressure at 60°C for 24-36 hours, then at 60°C for 24-36 hours under vacuum.

Mixed matrix membranes containing pure PEBAX-1657 polymer and ZIF-L filler material in different mass ratios (5%, 10%, 20%, and 40%) were synthesized by the solvent evaporation method. In the synthesis of the membranes, the amount of polymer in the membrane solution was changed in the range of 6%-12% while the mixture ratio by mass (70% EtOH and 30% water) in the mixture consisting of ethanol and water was kept constant. The amount of ZIF-L in the polymer solution in MMMs was determined by Equation 1. The percentage of ZIF-L in PEBAX 1657, which is a filler material, was changed between 0% and 40%.

For example, when synthesizing mixed matrix membranes containing 10% ZIF-L and 90% PEBAX-1657 polymer by mass, the following method was used: 1.2 g PEBAX-1657 was dissolved in a mixture of 10 g ethanol and water by stirring at 80°C for 1 hour at 300 rpm to prepare the solution containing polymer. Subsequently, the polymer solution was cooled to 35°C and stirred for 1 hour. Then, 0.133 g of ZIF-L was added to a 12% PEBAX-1657 polymer solution and stirred at 35°C for 1 hour at 200 rpm. The membrane solution was drawn as a thin film with an automatic film applicator on a commercial PES support layer at room temperature. The synthesized membranes were first annealed under atmospheric pressure at 60°C for 24 hours, then at 60°C for 24 hours under vacuum.

$$ZIF - L\ amount\ by\ mass\ =\ \frac{m_{ZIF-L}}{m_{ZIF-L} + m_{PEBAX-1657}}\qquad Eq.1$$

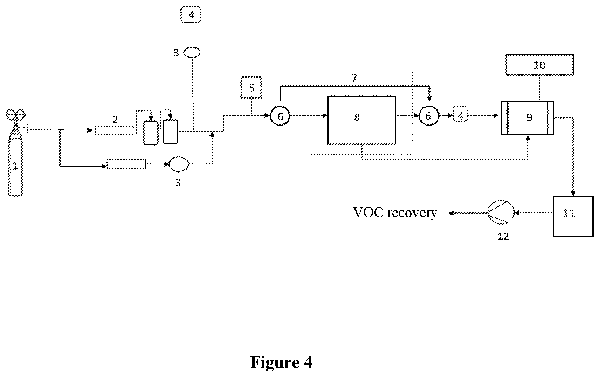

Membranes were synthesized on commercial PES ultrafiltration membranes (Microdyn Rare RM UP150 P). The PES layer is approximately 10 $\mu$m thick and its molecular weight limit value is 150 kDa. The performance of these membranes on the PES support layer before the membrane is synthesized was determined in the VOC/$N_2$ permeability test system given in Figure 4 (tests were performed at 35°C and 2.92 bar). Selective-permeable membrane performance was not observed in these tests conducted using only the PES support layer. The results showed that the PES support layer did not affect the performance of ZIF-L/PEBAX-1657 mixed matrix membranes. In addition, the nitrogen permeability of the PES ultrafiltration membrane is too high to be measured in our system. This indicates that PES does not contribute to the separation process but only gives mechanical stability.

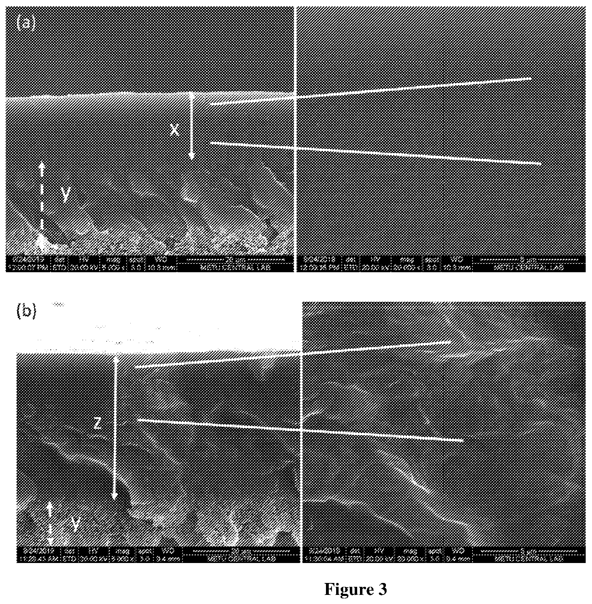

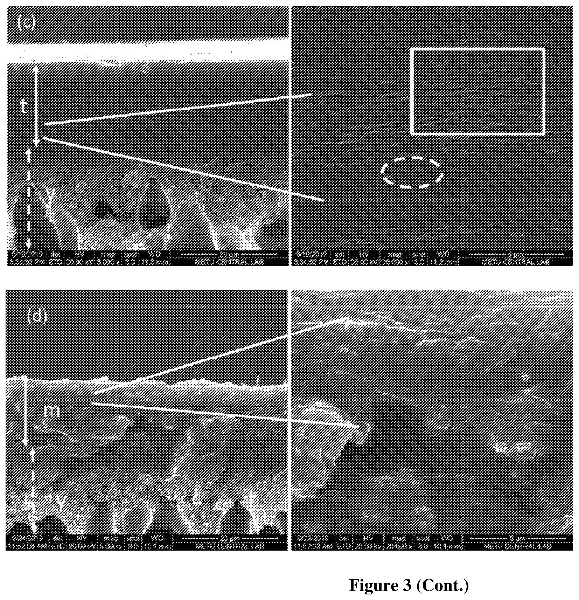

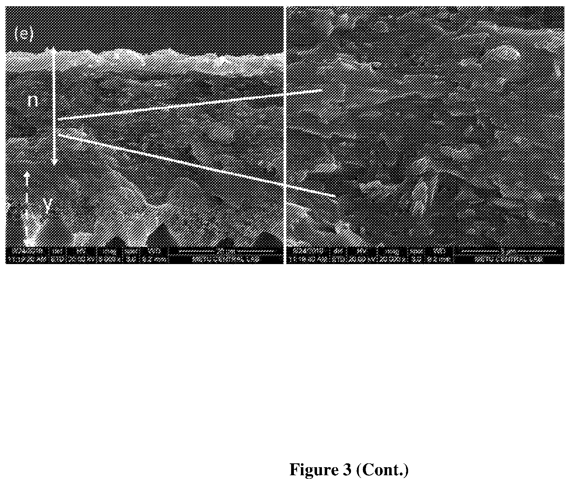

The cross-sectional area of the membranes is characterized by SEM. Each membrane layer is marked on the micrograph (Figure 3). The part indicated by the white dashed line shows the commercial PES support layer (y), which does not show selectivity, and the part indicated by the white continuous line shows the pure PEBAX (x) or mixed matrix membrane (MMM) (z,t,m,n), which shows selectivity. SEM micrographs show that the PEBAX layer completely adheres to the PES support (Figure 3.a). ZIF-L cannot be distinguished in the polymer due to its low mass in MMM containing 5% ZIF-L (Figure 3.b). However, it is seen in MMM containing 10% ZIF-L that ZIF-L crystals are positioned almost parallel to the membrane surface (Figure 3.c). The white rectangular part shows ZIF-L, and the white dashed round part shows the gaps formed on the membrane surface by the ZIF-Ls broken apart when preparing the SEM sample in Figure 3.c. In 10% ZIF-L/PEBAX MMM, ZIF-L polymer was almost homogeneously dispersed in the matrix and did not cause agglomeration as seen in Figure 3.c. In addition, it can be said that there is no gap between ZIF-L and the polymer while there is a complete compliance between PEBAX-1657 and ZIF-L. It is seen in MMM containing 20% and 40% ZIF-L that the filler material is not oriented properly and is aligned randomly (Figures 3.d and 3.e). It is seen especially in MMM where ZIF-L is 40% by mass that ZIF-Ls accumulate on top of each other. All ZIF-L/PEBAX-1657 mixed matrix membranes and pure PEBAX-1657 membrane synthesized using ZIF-L in different mass ratios (from 0% to 40%) were used for the first time in this patent invention to separate ethanol and isopropanol vapor from $N_2$ gas.

**Separation Performance of Membranes**

The separation performance of the synthesized membranes was determined in feed mixtures with very low concentrations. The molar ratio of the feed mixture was prepared by taking the VOC:$N_2$ molar ratio in the industry as a model. A laboratory-scale system has been established in which mixtures containing VOC at very low concentrations can be prepared and membrane performance can be tested in this direction. The flow sheet of the installed system is shown in Figure 4. Nitrogen, whose flow rate is adjusted with mass flow controller, comes to gas chromatograph (GC) by taking EtOH and IPA (isopropanol) vapor while passing through the solvent tank. The molar composition of the feed gas is determined before the membrane performance is tested in this way, The feed is sent to the membrane module after composition of the feed is adjusted as desired ($N_2$:EtOH:IPA molar ratio 976:15:9). The analysis of the permeate and retentate flows is performed by GC. The retentate flow rate is determined by the soap flow meter at the GC output. The VOCs in the permeate stream are condensed in the cold trap at the liquid nitrogen temperature at the GC outlet. The permeability value of the membrane was calculated by weighing the VOC solution obtained. The permeability value of the membranes is expressed by "Barrer" (1 Barrer=$10^{-10}$ cm$^3$(STP).cm/cm$^2$.s.cmHg), and the selectivity values ($\alpha$) are expressed by $[(x_{VOC}/ x_{N2})$ permeate stream]/$[(x^{VOC}/ x_{N2})$ retentate stream]. $x_{VOC}$ and $x_{N2}$ are the mole fraction of VOC (EtOH and IPA) and $N_2$ in the permeate stream, respectively. The membranes are approximately 25 cm x 15 cm and pieces with a diameter of approximately 4 cm were cut for testing. The surface area of the membranes tested is approximately 9.6 cm$^2$. Performance tests were performed at a temperature of 35°C with a 2.9 bar transmembrane pressure difference. A vacuum was applied to the permeate side of the membranes.

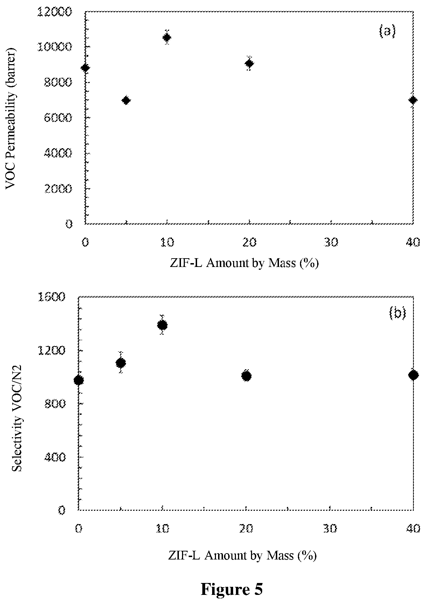

The VOC permeability and VOC/$N_2$ selectivity values of the synthesized pure PEBAX-1657 membrane and mixed matrix membranes containing different proportions of ZIF-L by mass are given in Figure 5. The permeability value of the membranes varies between 7000-10500 barrer (Figure 5.a) and the selectivity value varies between 970-1400 (Figure 5.b). The mixed matrix membrane containing 10% ZIF-L by mass has the best membrane performance with a permeability of 10500 barrer and a VOC/$N_2$ selectivity of around 1400.

Table 1 shows a comparison of the EtOH/$N_2$ separation performances of membranes synthesized by the invention (No. 1-5) and membranes known in the prior art.

Table 1 shows the ethanol permeance value of pure PEBAX-2533 of membranes 6 and 7 as 225 GPU and 299 GPU. It is not important that the permeances of the said membranes are higher compared to the membranes synthesized within the scope of the invention, and the permeability values obtained as a result of multiplying the actual permeance value with the membrane thickness are indicative of the performance of the membranes. Permeability values could not be compared since membrane thicknesses were not specified in these studies known in the art. However, the EtOH/$N_2$ selectivity values of membrane 6 given as 125 are another marker of membrane performance and are considerably lower compared to all membranes synthesized by the invention. This is also an indicator of the high separation performance of the membranes of the invention.

Table 1 also shows the results of ZIF-8/PDMS MMM, ZIF-L/PDMS MMM, ZIF-67/PDMS MMM, ZIF-7/PDMS MMM, and ZIF-71/PDMS MMMs synthesized using polymethoxysilane (PDMS) polymer in nitrogen separation from solvent vapor (Şahin et al., 2020). PDMS is the most preferred polymer for use in the separation of solvent vapor from nitrogen or air.

In these studies 5 different types of ZIF were used as filler materials and the amount of ZIF in all membranes was 20% by mass in the membrane solution. The best results were obtained with 20% ZIF-L/PDMS MMM in this study. It is seen that the EtOH/$N_2$ selectivity value increases approximately 35 times with the invention when 20% ZIF-L/PDMS MMM and 10% ZIF-L/PEBAX MMM, the inventive membrane, are compared.

**Table 1.** Comparison of the ethanol selectivity and permeability values obtained in the separation of the pure PEBAX-1657 membrane and approximately %2 (mol) VOC (% ethanol- % isopropanol)/$N_2$ mixture of ZIF-L/PEBAX MMM with the literature. The codes of the membranes of the invention are given as "X ZIF-L Y% PEBAX MMM". X shows the amount of ZIF-L % by mass in the membrane and Y shows the amount of polymer by mass in the membrane casting solution.

| | | Permeance (GPU) | | Permeability (Barrer) | | Selectivity | |
|---|---|---|---|---|---|---|---|
| **No** | | **EtOH** | **N$_2$** | **EtOH** | **N$_2$** | **EtOH/N$_2$** | **Source** |
| **1** | Pure PEBAX-1657 membrane | 261 | 0.12 | 10962 | 5 | 1099 | : |

(continued)

| No | | Permeance (GPU) | | Permeability (Barrer) | | Selectivity | |
|---|---|---|---|---|---|---|---|
| | | EtOH | $N_2$ | EtOH | $N_2$ | EtOH/$N_2$ | Source |
| 2 | 5% ZIF-L_ 12% PEBAX MMM | 247 | 0.12 | 8252 | 4 | 1240 | |
| 3 | 10% ZIF-L_ 12% PEBAX MMM | 174 | 0.08 | 11655 | 5 | 1508 | Invention |
| 4 | 20% ZIF-L_ 12% PEBAX MMM | 179 | 0.10 | 10563 | 6 | 1119 | Invention |
| 5 | 40% ZIF-L_ 6% PEBAX MMM | 116 | 0.07 | 6581 | 3 | 1134 | Invention |
| 6 | Pure PEBAX-2533 membrane | 225 | 3.3 | | | 125 | Liu et al., 2009 |
| 7 | Pure PEBAX-2533 membrane | 299 | | | | | Feng et al., 2006 |
| 8 | Pure PDMS membrane | | 3.44 | | 289 | 34 | Şahin et al., 2020 |
| 9 | 20% ZIF-8/PDMS MMM | | 5.14 | | 299 | 33 | Şahin et al., 2020 |
| 10 | 20% ZIF-L/PDMS MMM | | 2.87 | | 249 | 45 | Şahin et al., 2020 |
| 11 | 20% ZIF-67/PDMS MMM | | 4.05 | | 299 | 32 | Şahin et al., 2020 |
| 12 | 20% ZIF-7/PDMS MMM | | 4.88 | | 204 | 38 | Şahin et al., 2020 |
| 13 | 20% ZIF-71/PDMS MMM | | 4.28 | | 316 | 43 | Şahin et al., 2020 |

The main difference of the membrane of the invention from the membranes known in the art is that the PEBA polymer used in membrane synthesis is different. Another difference is the use of ZIF-L as a filler material. It is thought that ZIF-L may affect the structure of the polymer, adsorb the ethanol and IPA passing through the membrane, and prevent the passage of $N_2$, thus showing higher separation performance of mixed matrix membranes compared to pure PEBA membrane. It is stated in the literature that the PEBA polymer swells or plasticizes in the presence of solvents, and the ZIF-L in the membrane structure is effective on the swelling of the polymer and makes the polymer more selective against VOCs.

The addition of ZIF-L increases the VOC/$N_2$ selectivity values of the mixed matrix membranes synthesized as a result.

10% ZIF-L PEBAX-1657 MMM, which showed the best performance among the synthesized membranes, was VOC selective-permeable membrane, with VOC/$N_2$, EtOH/$N_2$, and IPA/$N_2$ selectivity of $1395 \pm 69$, $1508 \pm 83$ and $1199 \pm 66$, respectively. The dew point temperatures of the feed and permeate side were calculated using the data obtained experimentally from this membrane.

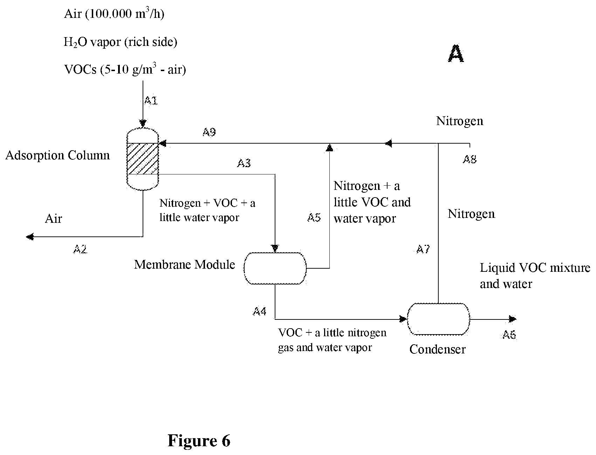

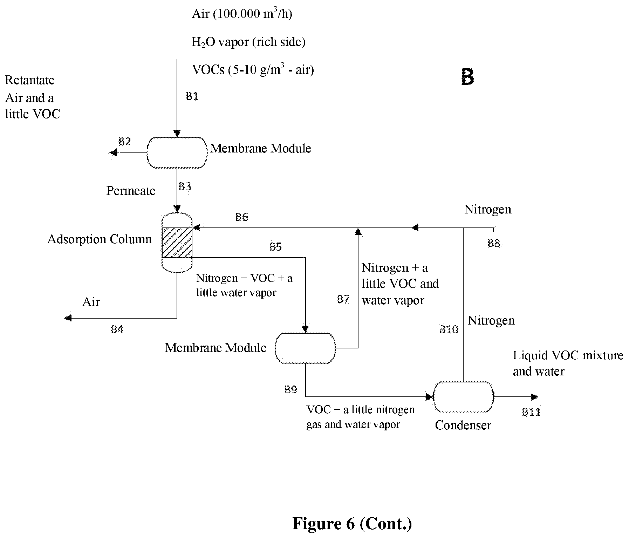

The efficiency of the process can be increased by adding membrane-based separation processes to a typical solvent recovery process used in the industry. Figures 6a and b provide possible flow sheets for solvent recovery processes involving membrane separation process. Air (Stream A1) with a low concentration of VOC and a significant amount of water vapor from the factory environment passes through adsorption columns in Figure 6a. VOCs retained in the columns are stripped with nitrogen gas (Stream A8). The dew point of the Nitrogen/VOC mixture (Stream A3) obtained after the sweeping process depends on the VOC concentration and VOC types. For example, the dew point of a mixture with molar ratios of $N_2$: 98.0, EtOH: 1.6, IPA: 0.4 is 5.5°C at 1.013 bar pressure. The dew point temperature can be significantly increased by enriching the $N_2$/VOC mixture to the condenser with VOC when a membrane module operating with a membrane with patent features is added to this process (Stream A4). For example, the molar composition of Stream A4 at the membrane module output according to the selectivity value of about 1400 shown by the membranes is expected to be $N_2$: 3.6, EtOH: 66.4, IPA: 30.1. The dew point of Stream A4 will be 78.7°C (1.013 bar) in this case. It is possible for the condenser to operate with water from cooling tower with a typical temperature between 20-30°C with an increase in the dew point from 5.5°C to 78.7°C, in this case the solvent recovery process will be more efficient and the operating cost will be lower. The membrane-based separation process was added not only between the adsorption column and the condenser but also before the adsorption in Figure 6b. The VOC concentration of the Nitrogen/VOC mixture to the adsorption (Stream B3) can be increased and the total gas flow rate is reduced with the addition of membrane. This may make it possible to further reduce the volume of the adsorption columns. The position of the membrane module in the separation processes can be changed according to the needs of the industry as a result. These results show that in the case of the use of a 10% ZIF-L PEBAX-1657 mixed matrix membrane after the adsorption column in the industry, condensation is possible even at room temperature, not in cryogenic conditions. The use of cold water instead of cryogenic cooling fluid will be sufficient and the economic efficiency of the solvent recovery process will increase in this way.

## Claims

1. A mixed matrix polymeric membrane for the separation of volatile organic compounds (VOC) from nitrogen and/or air **characterized in that**; it comprises a block copolymer matrix containing 60% by weight of elastomeric polyether block and 40% by weight of polyamide block, and 10%-40% by weight of ZIF-L filler material attached to said matrix.

2. The mixed matrix membrane according to claim 1 **characterized in that**; it comprises 10%-20% by weight of ZIF-L filler material attached to the copolymer matrix

3. The mixed matrix membrane according to claim 1 **characterized in that**; it comprises 10% by weight of ZIF-L filler material attached to the copolymer matrix.

4. The mixed matrix membrane according to claim 1 **characterized in that**; the VOC permeability value, measured according to the description, is in the range of 7000-10500 Barrer

5. The mixed matrix membrane according to claim 1 **characterized in that**; the VOC/$N_2$ selectivity value, measured according to the description, is in the range of 970-1400

6. The mixed matrix membrane according to claim 1 **characterized in that**; the VOC permeability value, measured according to the description, is 10500 Barrer

7. The mixed matrix membrane according to claim 1, **characterized in that**; the VOC/$N_2$ selectivity value , measured according to the description, is 1395 $\pm$ 69

8. The mixed matrix membrane according to claim 1 **characterized in that**; the EtOH/$N_2$ selectivity value , measured according to the description, is 1508 $\pm$ 83 at 35°C,

9. The mixed matrix membrane according to claim 1 **characterized in that**; the IPA/$N_2$ selectivity value is 1199 $\pm$ 66 at 35°C, feed VOC content of 2 % and transmembrane pressure of 2.9 bar.

10. The mixed matrix membrane according to claim 1 **characterized in that**; its thickness is between 10 $\mu$m and 70 $\mu$m.

11. The mixed matrix membrane according to claim 1, obtainable by the process of claim 15.

12. Use of the mixed matrix membrane according to claim 1 for the separation of volatile organic compounds from nitrogen and/or air.

13. Use according to claim 12, wherein the volatile organic compound is alcohol vapor.

14. Use according to claim 13, wherein the alcohol vapor is a mixture of ethanol and isopropanol.

**15.** A production method of the mixed matrix polymeric membrane according to claim 1 **characterized in that**; it comprises the following process steps:

- Dissolving 6-12% of block copolymer by weight containing 60% elastomeric polyether block and 40% polyamide block by weight at 60°C-80°C for 1-2 hours at 100-300 rpm in ethanol/water mixture by stirring,
- Cooling to 20°C-35°C and stirring for 1-2 more hours,
- Adding 10%-40% by weight of ZIF-L filler material into the solution,
- Stirring at 20°C-35°C for 1-2 hours at 100-200 rpm,
- Drawing the resulting membrane solution on a commercial PES support layer at room temperature.

**16.** The production method according to claim 15 **characterized in that**; after synthesis, the membranes are annealed at atmospheric pressure at 60°C for 24-36 hours, then at 60°C for 24-36 hours under vacuum.

**Patentansprüche**

**1.** Polymermembran mit gemischter Matrix zur Trennung flüchtiger organischer Verbindungen (VOC) von Stickstoff und/oder Luft, **dadurch gekennzeichnet, dass** sie eine Blockcopolymermatrix umfasst, die 60 Gew.- % eines elastomeren Polyetherblocks und 40 Gew.- % eines Polyamidblocks und 10%-40 Gew.- % eines an die Matrix gebundenen ZIF-L-Füllmaterials enthält.

**2.** Die gemischte Matrixmembran nach Anspruch 1, **dadurch gekennzeichnet, dass** sie 10%-20 Gew.- % ZIF-L-Füllmaterial umfasst, das an die Copolymermatrix gebunden ist.

**3.** Die gemischte Matrixmembran nach Anspruch 1, **dadurch gekennzeichnet, dass** sie 10 Gew.- % ZIF-L-Füllmaterial umfasst, der an die Copolymermatrix gebunden ist.

**4.** Die gemischte Matrixmembran nach Anspruch 1, **dadurch gekennzeichnet, dass** der VOC-Permeabilitätswert, gemessen gemäß der Beschreibung, im Bereich von 7000-10500 Barrer liegt.

**5.** Die gemischte Matrixmembran nach Anspruch 1, **dadurch gekennzeichnet, dass** der VOC/$N_2$-Selektivwert, gemessen gemäß der Beschreibung, im Bereich von 970-1400 liegt.

**6.** Die gemischte Matrixmembran nach Anspruch 1, **dadurch gekennzeichnet, dass** der VOC-Permeabilitätswert, gemessen gemäß der Beschreibung, im Bereich von 10500 Barrer liegt.

**7.** Die gemischte Matrixmembran nach Anspruch 1, **dadurch gekennzeichnet, dass** der VOC/$N_2$-Selektivwert, gemessen gemäß der Beschreibung, 1395 $\pm$ 69 beträgt.

**8.** Die gemischte Matrixmembran nach Anspruch 1, **dadurch gekennzeichnet, dass** der EtOH/$N_2$-Selektivwert, gemessen gemäß der Beschreibung, bei 35°C 1508 $\pm$ 83 beträgt.

**9.** Die gemischte Matrixmembran nach Anspruch 1, **dadurch gekennzeichnet, dass** der IPA/$N_2$-Selektivwert 1199 $\pm$ 66 bei 35°C, einem VOC-Gehalt von 2% und einem Transmembrandruck von 2.9 bar beträgt.

**10.** Die gemischte Matrixmembran nach Anspruch 1, **dadurch gekennzeichnet, dass** seine Dicke zwischen 10 $\mu$m und 70 $\mu$m liegt.

**11.** Die gemischte Matrixmembran nach Anspruch 1, **dadurch gekennzeichnet, dass** sie durch ein Verfahren nach Anspruch 15 erhältlich ist.

**12.** Verwendung der Mischmatrixmembran nach Anspruch 1 zur Trennung flüchtiger organischer Verbindungen von Stickstoff und/ oder Luft.

**13.** Verwendung nach Anspruch 12, wobei die flüchtige organische Verbindung Alkoholdampf ist.

**14.** Verwendung nach Anspruch 13, wobei der Alkoholdampf eine Mischung aus Ethanol und Isopropanol ist.

**15.** Herstellungsverfahren der Polymermembran mit gemischter Matrix nach Anspruch 1, **dadurch gekennzeichnet, dass** es die folgenden Verfahrensschritte umfasst:

• Lösen von 6-12 Gew.- % Blockcopolymer mit 60 Gew.- % elastomerem Polyetherblock und 40 Gew.- % Polyamidblock bei 60°C-80°C für 1-2 Stunden bei 100-300 U/min in Ethanol/Wasser-Gemisch durch Rühren,
• Abkühlen auf 20°C-35°C und noch 1-2 Stunden umrühren,
• Zugabe von 10%-40 Gew.- % ZIF-L-Füllmaterials in die Lösung,
• Rühren bei 20°C-35°C für 1-2 Stunden bei 100-200 U/min,
• Ziehen der resultierenden Membranlösung auf eine kommerzielle PES-Stützschicht bei Raumtemperatur.

**16.** Herstellungsverfahren nach Anspruch 15, **dadurch gekennzeichnet, dass** die Membranen nach der Synthese bei atmosphärischem Druck bei 60°C für 24-36 Stunden und dann bei 60°C für 24-36 Stunden unter Vakuum geglüht werden.

## Revendications

**1.** Membrane polymère à matrice mixte pour la séparation de composés organiques volatils (COV) de l'azote et/ou de l'air, **caractérisée en ce qu'**elle comprend une matrice de copolymère à blocs contenant 60 % en poids d'un bloc polyéther élastomère et 40 % en poids d'un bloc polyamide, et 10 % - 40 % en poids d'un matériau de remplissage ZIF-L attaché à ladite matrice.

**2.** Membrane à matrice mixte selon la revendication 1, **caractérisée en ce qu'**elle comprend 10 % - 20 % en poids de matériau de remplissage ZIF-L attaché à la matrice de copolymère.

**3.** Membrane à matrice mixte selon la revendication 1, **caractérisée en ce qu'**elle comprend 10 % en poids de matériau de remplissage ZIF-L attaché à la matrice de copolymère.

**4.** Membrane à matrice mixte selon la revendication 1, **caractérisée en ce que** la valeur de perméabilité aux COV, mesurée selon la description se situe dans la plage de 7000 à 10500 Barrer.

**5.** Membrane à matrice mixte selon la revendication 1, **caractérisée en ce que** la valeur de sélectivité COV/N$_2$ mesurée selon la description se situe dans la plage de 970 - 1400.

**6.** Membrane à matrice mixte selon la revendication 1, **caractérisée en ce que** la valeur de perméabilité aux COV mesurée selon la description est de 10500 Barrer.

**7.** Membrane à matrice mixte selon la revendication 1, **caractérisée en ce que** la valeur de sélectivité COV/N$_2$ mesurée selon la description est de 1395 $\pm$ 69.

**8.** Membrane à matrice mixte selon la revendication 1, **caractérisée en ce que** la valeur de sélectivité EtOH/N$_2$ mesurée selon la description est de 1508 $\pm$ 83 à 35°C.

**9.** Membrane à matrice mixte selon la revendication 1, **caractérisée en ce que** la valeur de sélectivité IPA/N$_2$ est de 1199 $\pm$ 66 à 35°C, la teneur en COV de l'alimentation est de 2 % et la pression transmembranaire est de 2,9 bars.

**10.** Membrane à matrice mixte selon la revendication 1, **caractérisée en ce que** son épaisseur est comprise entre 10 $\mu$m et 70 $\mu$m.

**11.** Membrane à matrice mixte selon la revendication 1 obtenable par le procédé de la revendication 15.

**12.** Utilisation de la membrane à matrice mixte selon la revendication 1 pour la séparation des composés organiques volatils de l'azote et/ou de l'air.

**13.** Utilisation selon la revendication 12, dans laquelle le composé organique volatil est de la vapeur d'alcool.

**14.** Utilisation selon la revendication 13, dans laquelle la vapeur d'alcool est un mélange d'éthanol et d'isopropanol.

**15.** Méthode de production de la membrane polymère à matrice mixte selon la revendication 1, **caractérisée en ce qu'**elle comprend les étapes de procédé suivantes :

• Dissoudre 6 - 12 % en poids d'un copolymère à blocs contenant 60 % en poids d'un bloc polyéther élastomère et 40 % en poids d'un bloc polyamide à 60 °C - 80 °C pendant 1 - 2 heures à 100 - 300 tr/min dans un mélange d'éthanol et d'eau sous agitation.
• Refroidir à 20 °C - 35 °C et agiter pendant 1 - 2 heures encore,
• Ajouter 10 % - 40 % en poids de matériau de remplissage ZIF-L à la solution,
• Agiter à 20 °C - 35 °C pendant 1 - 2 heures à 100 - 200 tr/min.
• Tirer la solution membranaire obtenue sur une couche de support PES commerciale à température ambiante.

**16.** Méthode de production selon la revendication 15 **caractérisée en ce qu'**après la synthèse, les membranes sont recuites à pression atmosphérique à 60 °C pendant 24 - 36 heures, puis à 60 °C pendant 24 - 36 heures sous vide.

$$\left[\left(\!\!\underset{\overset{\|}{O}}{C}-C_5H_{10}-\underset{}{\overset{H}{N}}\!\!\right)_{0.4}-\underset{\overset{\|}{O}}{C}-C_4H_8-\underset{\overset{\|}{O}}{C}-O-\left(C_2H_4O\right)_{0.6}\right]_n$$

**Figure 1**

Figure 2

Figure 3

Figure 3 (Cont.)

**Figure 3 (Cont.)**

**Figure 4**

Figure 5

Air (100.000 m³/h)

H₂O vapor (rich side)

VOCs (5-10 g/m³ - air)

**A**

A1

Nitrogen

A9

Adsorption Column

A3

A8

Nitrogen + a
little VOC and
water vapor

Nitrogen

A5

Air

A7

Liquid VOC mixture
and water

A2

Nitrogen + VOC + a
little water vapor

Membrane Module

A4

VOC + a little nitrogen
gas and water vapor

Condenser

A6

**Figure 6**

Air (100.000 m³/h)

H₂O vapor (rich side)

VOCs (5-10 g/m³ - air)

B

Retantate
Air and a
little VOC

81

82

Membrane Module

Permeate   83

Nitrogen

86

Adsorption Column

88

85

Nitrogen + VOC + a
little water vapor

Nitrogen + a
little VOC and
water vapor

Air

87

84

Membrane Module

Nitrogen

810

Nitrogen

Liquid VOC mixture
and water

89

VOC + a little nitrogen
gas and water vapor

Condenser

811

**Figure 6 (Cont.)**

**EP 4 182 063 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005686090 B2
- WO 2010137974 A1
- US 20110120304 A1
- CN 2013103100313 A
- CN 2013103537207 A
- CN 2015104689730 A
- CN 2015105582823 A
- CN 2016104607072 B
- CN 2017104525006 B
- US 20170157555 A1
- US 20170157556 A1
- US 20170157557 A1